Europäisches Patentamt

European Patent Office

Office européen des brevets

(19)

(11) Publication number: **0 431 279 A1**

(12) **EUROPEAN PATENT APPLICATION**

(21) Application number: **90119247.6**

(22) Date of filing: **08.10.90**

(51) Int. Cl.⁵: **H02G 1/10**

The title of the invention has been amended (Guidelines for Examination in the EPO, A-III, 7.3).

(30) Priority: **11.10.89 NO 894057**

(43) Date of publication of application:
**12.06.91 Bulletin 91/24**

(84) Designated Contracting States:
**BE DE DK ES FR GB IT NL SE**

(71) Applicant: **ALCATEL STK A/S**
**Ostre Aker vei 33**
**Oslo(NO)**

(72) Inventor: **Aanerud, Lars Arthur**
**Harastien 4**
**N-2014 Blystadlia(NO)**
Inventor: **Prestegarden, Magne**
**Eikhaugen 46**
**N-3000 Drammen(NO)**
Inventor: **Snellingen, Halvor**
**Tunby**
**N-1820 Spydeberg(NO)**

(74) Representative: **Weinmiller, Jürgen et al**
**Lennéstrasse 9 Postfach 24**
**W-8133 Feldafing(DE)**

(54) **Means for installing an elongate flexible body, such as a fibre cable.**

(57) The present invention relates to means for installing a longitudinal flexible body, such as a subsea fibre cable (1) on a sea bed from a vessel or cable ship. It includes cable guiding means (3) suspended substantially vertically from the vessel to a predetermined distance above the sea bed (19). The cable guiding means (3) has a weight (8) large enough to secure a substantially vertical position relatively to the laying vessel, when the actual sea currents and depth conditions are taken into consideration.

Fig. 1

## MEANS FOR INSTALLING A LONGITUDINAL FLEXIBLE BODY, SUCH AS A SUBSEA FIBRE CABLE.

The present invention relates to means for installing a flexible line, for instance a cable, a pipeline or similar on or in the sea bed. A device which includes trenching and burying of the line is described in European Patent No. 0 026 182 (M. Prestegården 1). This device satisfies the high demands placed on efficiency, operational reliability, simplicity and ease of handling under the special conditions encountered when digging a trench in the sea bed. The device is uncomplicated, robust and light in weight and can be modified to make suitable trenches, - also at great water-depths.

The mentioned trenching device is especially designed for making trenches for cables already laid on the sea bed. The process of installing cables in the sea bed are therefore usually made in two steps, one laying step and one burying step. Other descriptions concerning the trenching step can be found in US Patents Nos. 3,576,111, 3,877,237 and 4,114,390.

Experiments have, however, been made to combine the cable laying process and the trenching process. Methods by which the cable was fed directly to the trenching device were, however, not very successful.

Installation of heavy, cross armoured power cables and pipelines requires very specialized technique, but control of their position in front of the trenching device is rather easy. Difficulties arise when installing flexible lightweight telecommunication cables, such as single armoured fibre cables, at great depths. When such cables are to be buried, the laying procedures must be very careful in order to record the exact position of the cable, before starting the trenching operation.

The object of the invention is to provide cable laying means which are suitable for installing flexible lightweight cables on the sea bed with simultaneous trenching or with trenching at a later time.

The main features of the invention are defined in the accompanying claims. With the device of the invention it is possible to install the lightweight cable along a defined track, using a very low pulling force as compared to the forces used when installing heavy power cables. The laying operation can be done independently of the water depth and sea currents. The position of the cable close to the sea bed can be controlled. The pulling force in the cable may be controlled by adjusting the weight of the lower part of the cable guide. The laying operation can be supervised with video and other electronic instruments. The cable pulling force can be controlled. Supervision can be done even at high laying speeds. The invention is also suitable for laying a cable in a premade trench or laying the cable along a predetermined track.

Above mentioned and other features and objects of the present invention will clearly appear from the following detailed description of embodiments of the invention taken in conjunction with the drawings, where

Figure 1 schematically shows the cable guiding means, and

Figures 2 and 3 respectively illustrates laying of cable without or with simultaneous trenching.

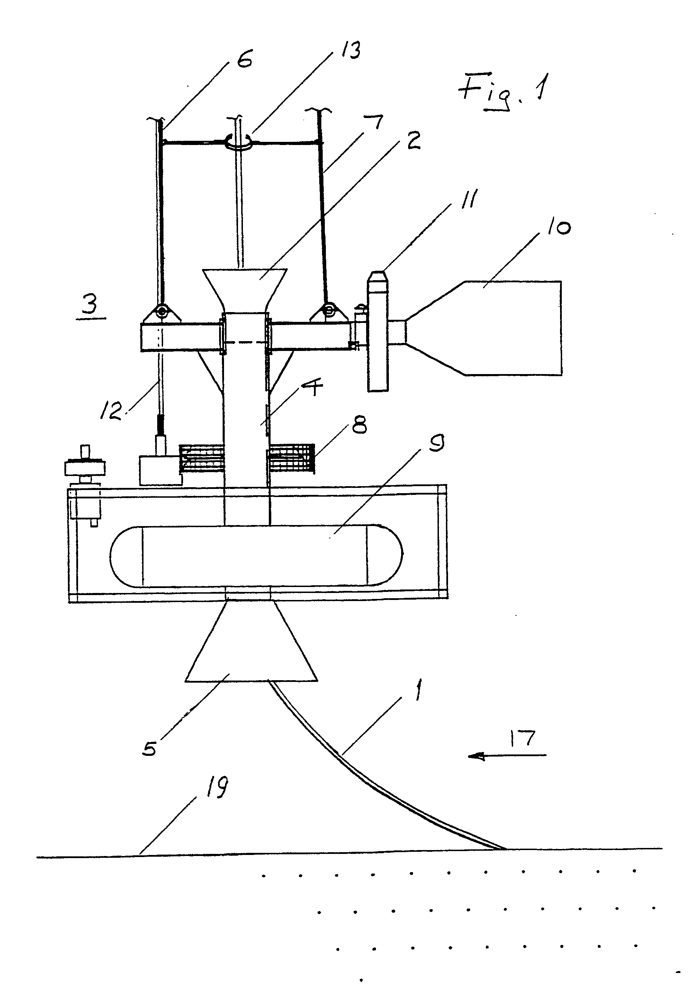

In Figure 1 a flexible lightweight cable 1 is lowered from a cable ship (not shown) into an upper funnel 2 of a cable guiding device 3. The cable 1 passes through a pipe 4 and leaves the pipe through a funnel 5 a short distance above the sea bed 19. The funnel 5 should be about 2-3m above the sea bed. The cable 1 may be laid on the sea bed itself or into a premade trench (not shown).

The guiding device 3 is supported from the cable ship by means of one or two wires 6 and 7 and it is provided with a weight 8, the size of which is adapted to the type of cable to be laid, to the water depth and to the sea currents. The purpose of the combined weight of the guiding device is to ensure that the funnel 5 has a defined position relatively to the sea bed and that the pull in the cable laying on the sea bed is suitable. The weight may be constituted by blocks of concrete, stone or lead.

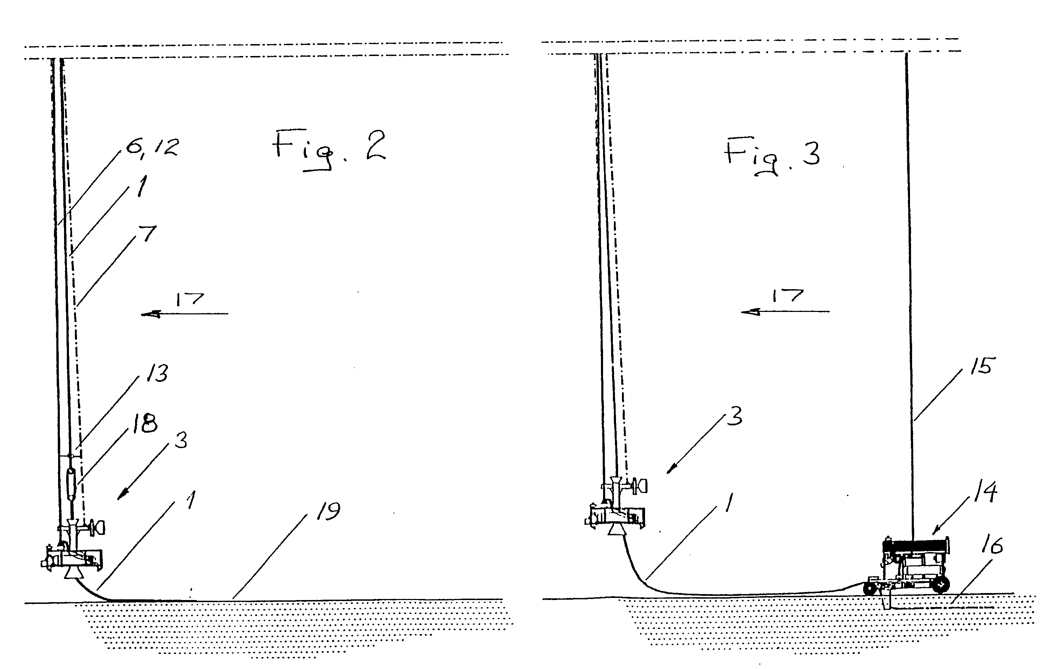

The cable guiding means 3 may include electronic instrumentation 9, like video, gyro, sonar, altimeter and inclination equipment for controlling and recording the position of the cable 1. The instrumentation may also include means for controlling the relative position between the guiding means and a trenching device (14, Fig 3). The cable guiding means 3 may also include rudder means 10 and propeller means 11 for actively positioning the cable on the sea bed 19. The control signals and power for the electronic instrumentation and for the rudder/propeller may be supplied from the cable ship, via an umbilical cable 12 supported on one of the supporting wires 6,7. (In Figure 2 and 3 the supporting wire 7 is shown as an optional wire.) The cable 1 may also be guided from the ship to the funnel 2 by means of one or more guide rings 13 secured to either or both of the wires 6,7.

The guiding means will be suitable for laying lightweight cables such as fibre optic cables at depths down to 1000m. The weight of such cables is in the order of 0.5 - 5 kg per meter length. The single layer armour results in a minimum bending diameter of 1.5m and the distance between the guide rings 13 should be relatively short to avoid coiling and kinking between the rings. The horizontal positioning requirements are ±1% of the laying depth, even with sea currents in the order of 2 knots. The total weight of the guiding means 3 may be in the order of 1,000 kg of which some 800 kg may be made up by the weight 8.

In Figure 2 is schematically illustrated how a cable 1 is lowered to the sea bed 19 by means of a guiding device 3, whereas in Figure 3 is illustrated how the cable 1 can be lowered to the sea bed directly in front of a trenching device 14 to obtain simultaneous laying and trenching. The distance between the guiding means 3 and the trenching device 14 should be in the order of 10m but it could be longer. The trenching device is connected to the cable ship (not shown) by an umbilical device 15. The trenching device picks up the cable 1, fluidizes the sea bed, removes the gravel and lets the cable into a trench 16. If the distance between the laying position and the trenching position is more than, say 100m, it would be practical to use two different surface ships (not shown). The cable ship or ships move in the direction indicated with the arrows 17. A cable strain sensor and a declination meter may be used to control the speed of the cable ship(s) and in particular the positioning and installation of the rather sensitive fibre cable 1.

When lightweight cables such as fibre cables are installed without using the cable guiding device of the present invention, there is a risk that the cable may form loops close to or on the sea bed or in front of a cable trenching device. At great depths, sea currents may bring the cable to rest along a track different from that planned. Furthermore, if the pulling force is not correct at the point of laying the cable, it may make loops on the sea bed or even within a trench, due to the twisting effect caused by the single armour layer. The guiding means is suitable for laying a line along a predetermined path and for laying a line in a premade trench. The cable guiding means of the present invention also facilitates correction of the positioning of the cable during the laying process. Cable buffer or accumulator means 18 may be arranged as illustrated in Figure 2, between the cable ship and the guiding means 3, preferably right above the guiding means 3, for taking up possible slacks in the cable 1.

The line guiding means of the present invention facilitates increased laying speed without the use of ROV's (remote controlled vehicles) or divers at sea depths down to 1000m and more. If trenching is not required the laying speed may be increased further.

If predetermined positioning (and trenching) is not required of some reason or other, the guiding means 3 may be removed or lifted to a higher position close to the ship bow. This situation may be preferred when the cable is installed in shallow parts of the cable path. In this case the cable will hang freely from the ship to the sea bed. The cable may also be positioned along a predetermined track by a diver or by a diving vessel. The cable may then also be guided directly to a trenching device.

The above detailed description of embodiments of this invention must be taken as examples only and should not be considered as limitations on the scope of protection.

## Claims

1. Means for installing a longitudinal flexible body, such as a subsea fibre cable (1) on a sea bed from a vessel or cable ship, **characterized in this that** it includes cable guiding means (3) suspended substantially vertically from the vessel to a predetermined distance above the sea bed (19).

2. Means according to claim 1, **characterized in this that** the cable guiding means (3) has a weight (8) large enough to secure a substantially vertical position relatively to the laying vessel, when the actual sea currents and depth conditions are taken into consideration.

3. Means according to claim 1, **characterized in this that** the cable guiding means (3) is provided with a funnel shaped outlet (5).

4. Means according to claim 1, **characterized in this that** it includes a cable inlet funnel (2) and possibly one or more cable guide rings (13) between the vessel and the guiding means (3).

5. Means according to claim 1, **characterized in this that** the cable guiding means (3) includes electronic instrumentation (9), like video, gyro, sonar, altimeter and inclination equipment for controlling and recording the position of the cable (1).

6. Means according to claim 5, **characterized in this that** the instrumentation includes means for controlling the relative position between the guiding means (3) and trenching device (14).

7. Means according to claim 1, **characterized in this that** the cable guiding means (3) includes rudder and propeller means (10,11) for actively positioning the cable on the sea bed or in a trench.

8. Means according to claim 1, **characterized in this that** it includes cable accumulator means (18) arranged close to the guiding means (3).

Fig. 1

Fig. 2

Fig. 3

EP 0 431 279 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 446 551  (CABLES DE LYON)<br>* Page 3, line 34 - page 4, line 1; figures 3,6 *<br>— — — | 1,2,5,6,8 | H 02 G<br>1/10 |
| X | GB-A-9 555 98  (WESTERN ELECTRIC)<br>* Page 1, lines 18-85; figure 1 *<br>— — — | 1,2,5 | |
| A | GB-A-8 395 46  (POSTMASTER GENERAL)<br>* Figure 1 *<br>— — — | 3,4 | |
| A | JOURNAL OF ELECTRONIC ENGINEERING, vol. 24, no. 243, March 1987, pages 83-86, Tokyo, JP; Y. EJIRI: "A self-driven submarine cable burier"<br>* Page 86, lines 5-34 *<br>— — — — — | 5 | |

TECHNICAL FIELDS
SEARCHED (Int. Cl.5)

H 02 G
B 63 B

The present search report has been drawn up for all claims

| Place of search | Date of completion of search | Examiner |
|---|---|---|
| The Hague | 15 January 91 | HUNT A.E. |